Europäisches Patentamt

European Patent Office

Office européen des brevets

(19)

(11) EP 0 693 674 B1

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(51) Int Cl.$^6$: **G01D 5/20**

(21) Anmeldenummer: **95110730.9**

(22) Anmeldetag: **10.07.1995**

(54) **Vorrichtung mit einem Messtransformator zur Erfassung der position eines linear beweglichen Objektes**

Apparatus for detecting the position of a linear movable object, with a measuring transformer

Appareil pour déterminer la position d'un objet linéairement mobil, avec un transformateur de mesure

(84) Benannte Vertragsstaaten:
**AT CH DE ES FR GB IT LI NL PT SE**

(30) Priorität: **21.07.1994 DE 4425903**

(43) Veröffentlichungstag der Anmeldung:
**24.01.1996 Patentblatt 1996/04**

(73) Patentinhaber: **SIEMENS AKTIENGESELLSCHAFT**
**80333 München (DE)**

(72) Erfinder:
• **Cuylen, Michael**
**D-90513 Zirndorf (DE)**
• **Stecher, Werner, Dipl. Ing.**
**D-91183 Abenberg (DE)**

(56) Entgegenhaltungen:
**EP-A- 0 238 922      GB-A- 2 040 465**
**US-A- 4 851 959**

**Beschreibung**

Die Erfindung betrifft einen Meßtransformator, welcher einen langgestreckten Kern aufweist, der bevorzugt aus weichmagnetischem Material gefertigt ist. Es ist eine erste, langgestreckte Wicklung vorhanden, welche bevorzugt annähernd über die gesamte Länge auf den langgestreckten Kern gewickelt ist. Ferner ist eine zweite, geteilten Wicklung vorhanden, deren beide Teilspulen jeweils annähernd im Bereich der Enden über die erste, langgestreckte Wicklung gewickelt sind. Schließlich ist ein Ansteuermagneten vorhanden, mit einem annähernd parallel zur ersten, langgestreckten Wicklung liegenden linearen Verfahrweg. Der Ansteuermagnet kann mit einem beliebigen anderen Objekt verbunden und von diesem berührungslos auf dem Verfahrweg parallel an dem langgestreckten Kern und den darauf befindlichen Wicklungen entlang geführt werden. Mit einer derartigen, desweiteren kurz als Meßtransformator bezeichneten Anordnung ist es möglich, die aktuelle Linearposition eines mit dem Ansteuermagneten verbundenen Objektes auf dem durch die Länge des langgestreckten Kerns und insbesondere der darauf befindlichen ersten, langgestreckten Wicklung bestimmten Verfahrweges zu bestimmen.

Ein Meßtransformator der oben beschriebenen Art ist z.B. von der Firma Vacuumschmelze GmbH erhältlich. Ein derartiger Meßtransformator kann auch als PLCD-Sensor (**P**aramagnetic **L**inear **C**ontactless **D**isplacement **S**ensor) bezeichnet werden.

In der EP 0 238 922 A1 ist ein praktischer Aufbau eines derartigen Meßtransformators im Detail beschrieben. Dabei werden zwei an den Enden des langgestreckten Kerns befindliche Erregerwicklungen, welche der oben genannten zweiten geteilten Wicklung entsprechen, von einer Wechselspannungsquelle gespeist. Eine die aktuelle Lage des Ansteuermagneten kennzeichnende Summenspannung wird an einer auf dem langgestreckten Kern zwischen den beiden Erregerwicklungen befindlichen Sekundärspule, welche der oben genannten ersten langgestreckten Wicklung entspricht, abgenommen.

Zur Ansteuerung eines derartigen PLCD-Meßtransformators werden bislang Schaltungen eingesetzt, welche z.B. von der Firma VALVO unter der Bezeichnung SE/NE5521 bzw. der Firma ANALOG DEVICES unter der Bezeichnung AD598 erhältlich sind. Diese Ansteuerschaltungen haben zum einen den Nachteil, daß sie an sich zum Betrieb eines anderen, als LVDT (**L**inear **V**ariable **D**ifferential **T**ransformer) bezeichneten, und auf dem Prinzip einer Tauchspule beruhenden Sensors bestimmt sind. Der wesentliche Nachteil dieser Ansteuerschaltungen wird aber darin gesehen, daß zur Erregung des Meßtransformators die Einspeisung einer sinusförmigen Spannung vorgesehen ist. Hierdurch tritt zum einen der Nachteil auf, daß das Meßsignal am Ausgang des Meßtransformators abhängig ist von den aktuellen Werten der Induktivität und des Innenwiderstandes der Spulenanordnung, und insbesondere von dem Temperaturgang dieser Größen. Es müssen somit schaltungstechnisch aufwendige Maßnahmen vorgesehen werden, um hiervon hervorgerufene Driftungen des Meßsignales am Ausgang des Meßtransformators zu kompensieren. Da derartige Kompensationen in der Regel nur unvollständig sein können, ist das bereitgestellte Linearpositions-Meßsignal mit einem Fehler behaftet. Zum anderen tritt der weitere Nachteil auf, daß das Meßsignal am Ausgang des Meßtransformators aufgrund der Sinusförmigkeit der erregenden Eingangsspannung zum Zwecke der Bildung eines Gleichspannungs-Meßsignales wiederum in einer schaltungstechnisch aufwendigen Weise geglättet werden muß. Auch hierdurch wird der im Meßsignal enthaltene Fehler in der Regel vergrößert.

Eine derartige Ansteuerung ist auch bei der in der DE-AS 23 25 752 beschriebenen Einrichtung vorgesehen. Dabei ist ein langgestreckter, rechteckförmiger Rahmenkern mit zwei längeren und zwei kürzeren Schenkeln vorhanden. Ein Permanentmagnet kann im Inneren des Rahmenkerns entlang der längeren Schenkel bewegt werden. Auf einem der längeren Schenkel ist eine Primärwicklung aufgebracht, welche von einem konstanten Speisewechselstrom gespeist wird. Auf den kürzeren Schenkeln sind zwei Sekundärwicklungen aufgebracht, deren Ausgänge einem Gleichrichter und einem Differenzbildner zugeführt werden zur Bereitstellung einer die aktuelle Position des Permanentmagneten kennzeichnenden Ausgangsspannung. Zur Verbesserung der Linearität der Einrichtung und zur Unterdrückung von ungeraden Harmonischen, d.h. zur Unterdrückung des Einflusses von Netzspannungsschwankungen, muß ein zusätzlicher Rückkopplungskreis vorgesehen werden. Dieser besteht aus zwei auf den kürzeren Schenkeln des Rahmenkerns aufgebrachten zusätzlichen Spulen, welche über eine Diode verbunden sind.

Aus der GB 2 040 465 A ist eine Kontrolleinrichtung mit einem Steuerknüppel bekannt, welcher radial in alle Raumrichtungen beweglich ist. Zur Erfassung der aktuellen Auslenkung des Steuerknüppels ist eine Hauptinduktivität in der Achse des Steuerknüppels auf einer Montageplatte feststehend angebracht. An den vier Eckpunkten der Montageplatte sind Meßinduktivitäten angeordnet. Durch eine mit dem Steuerknüppel verbundene Läuferscheibe kann der magnetische Fluß zwischen der Hauptinduktivität und den vier Meßinduktivitäten abhängig von der aktuellen Neigung und Raumrichtung des Steuerknüppels beeinflußt werden. Zur Auswertung dieser Beeinflussung dient eine Meßschaltung, bei der ein dreieckförmiger Strom in die Hauptinduktivität eingespeist wird. Die am Ausgang der Reihenschaltung der Meßinduktivitäten auftretende Spannung wird in einem Gleichrichter zu einer Meßspannung gleichgerichtet, welche ein Maß für die aktuelle Neigung des Steuerknüppels ist.

Demgegenüber liegt der Erfindung die Aufgabe zugrunde, einen aus einem Meßtransformator und einer Ansteuer- und Auswerteschaltung bestehenden magnetischen Wegsensor anzugeben, welcher ein hochgenaues Linearpositionsmeßsignal bereitstellt.

Die Aufgabe wird gelöst mit der im Anspruch 1 angegebenen Vorrichtung. Eine vorteilhafte weitere Ausführungsform ist in dem abhängigen Patentanspruch 2 angegeben.

Die Erfindung und vorteilhafte Ausführungsformen derselben werden anhand der nachfolgend kurz dargestellten Figuren näher erläutert. Dabei zeigt

Fig.1 eine prinzipielle Darstellung eines Meßtransformators der erfindungsgemäßen Vorrichtung,

Fig.2 ein Blockschaltbild der aus Meßtransformator und Ansteuer- und Auswerteschaltung bestehenden, erfindungsgemäßen Vorrichtung zur Erfassung der Position eines linear beweglichen Objektes, und

Fig.3a den Zeitverlauf eines erfindungsgemäß zur Ansteuerung des Meßtransformators der erfindungsgemäßen Vorrichtung dienenden eingeprägten periodischen Wechselstromes, welcher eine dreieckförmige Form aufweist, und

Fig.3b-3c beispielhaft die bei der Ansteuerung mit dem dreieckförmigen, eingeprägten, Wechselstrom auftretenden und zu vier unterschiedlichen Positionen a,b,c,d des Ansteuermagneten auf dem Verfahrweg gehörigen Zeitverläufe einer Meßwechselspannung Uw und einer hieraus abgeleiteten Meßgleichspannung Ug am Ausgang der erfindungsgemäßen Vorrichtung.

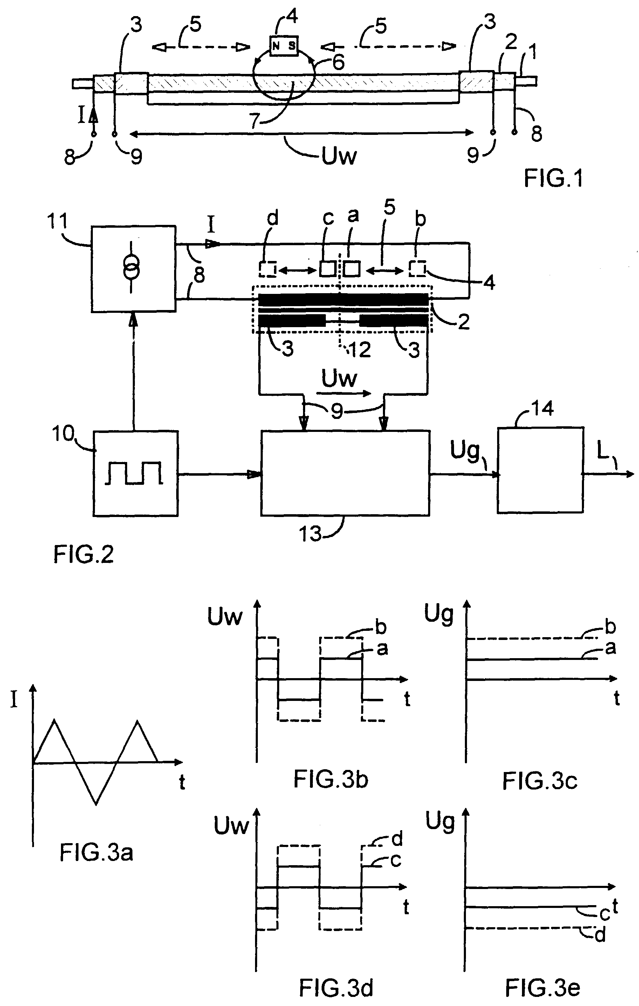

In Figur 1 ist der prinzipielle Aufbau eines Meßtransformators der erfindungsgemäßen Vorrichtung dargestellt. Dieser weist einen langgestreckten Kern 1 auf, welcher bevorzugt aus einem weichmagnetischen Material besteht. Eine erste, langgestreckte Wicklung 2 ist bevorzugt über dessen gesamte Länge auf den langgestreckten Kern 1 gewickelt. Ferner ist eine zweite, geteilte Wicklung 3 vorhanden, deren zwei Teilspulen jeweils annähernd im Bereich der Enden über die erste, langgestreckte Wicklung 2 gewickelt sind. Schließlich ist ein Ansteuermagnet 4 vorhanden, der auf einem annähernd parallel zum langgestreckten Kern 1 bzw. zur ersten, langgestreckten Wicklung 2 liegenden linearen Verfahrweg 5 berührungslos positionierbar ist. Der Ansteuermagnet kann mit einem beliebigen weiteren Objekt verbunden sein, dessen aktuelle Linearposition auf dem zur Verfügung stehenden Verfahrweg 5 mit der erfindungsgemäßen Vorrichtung bestimmbar ist.

Die Ansteuerung des Meßtransformators erfolgt somit über den Ansteuermagneten 4. Dessen Magnetfeld 6 wirkt regional auf die erste, langgestreckte Wicklung 2 ein und ruft einen lokal begrenzten Sättigungsbereich 6 in der Anordnung aus langgestrecktem Kern 1 und erster Wicklung 2 hervor. Die Position dieses gesättigten Bereiches 6 entlang dem Verfahrweg 5 kann durch die Anordnung der beiden Wicklungen 2 und 3 ermittelt werden. Hierzu wird erfindungsgemäß ein periodischer, dreieckförmiger Strom I in die erste, langgestreckte Wicklung 2 über deren Anschlußkontakte 8 eingeprägt. Hierdurch wird eine Meßwechselspannung Uw im Meßtransformator induziert, die an den Anschlußklemmen 9 der zweiten, geteilten Wicklung 3 abgegriffen werden kann. Diese ist bei dem dreieckförmigen eingeprägten, periodischen Wechselstrom I rechteckförmig, und weist eine von der aktuellen Lage des Ansteuermagneten 4 auf dem Verfahrweg 5 abhängige Stufenhöhe auf.

In Figur 2 ist in Form eines Blockschaltbildes die aus einem Meßtransformator, wie er beispielhaft in Figur 1 gezeigt ist, und einer Ansteuer- und Auswerteschaltung bestehende, erfindungsgemäße Vorrichtung zur Erfassung der Position eines linear beweglichen Objektes dargestellt. Erfindungsgemäß weist die Ansteuer- und Auswerteschaltung eine Stromquelle 11 auf, welche einen periodischen, dreieckförmigen Wechselstrom I in die erste, langgestreckte Wicklung 2 über deren Anschlußkontakte 8 einprägt. Erfindungsgemäß weist dieser eingeprägte Strom I eine Dreieckform auf, wie dies beispielhaft in Figur 3a dargestellt ist. Gemäß einer in Figur 2 bereits dargestellten, vorteilhaften Weiterbildung der Erfindung wird die Stromquelle 11 über einen Taktgenerator 10 gesteuert. Hierüber kann die Frequenz des periodischen Wechselstromes I anwendungsabhängig optimal vorgegeben werden.

Der Zusammenhang zwischen dem erregenden, eingeprägten Wechselstrom I und der induzierten Meßwechselspannung Uw am Ausgang der zweiten, geteilten Wicklung 2 kann angenähert wie folgt dargestellt werden :

$$Uw = - k * L * dI/dt$$

$U_w$: induzierte Meßwechselspannung
k: Übersetzungsverhältnis des Meßtransformators, abhängig von der aktuellen Position des Ansteuermagneten 4
L: Induktivität des Meßtransformators
dI/dt: zeitliche Ableitung des eingeprägten Wechselstromes

In Figur 2 sind beispielhaft vier unterschiedliche Positionen a, b, c, d des Ansteuermagneten 4 auf dem Verfahrweg 5 dargestellt. Dabei ist die Mitte der ersten, langgestreckten Wicklung 2 und damit die Mitte des Verfahrweges 5 durch eine strichpunktierte Linie 12 markiert. Beispielhaft liegen die mit a,c bezeichneten Positionen des Ansteuermagneten 4 in den beidseitig der Mitte 12 benachbarten Bereichen, während die mit b,d bezeichneten Positionen des Ansteuermagneten 4 jeweils an einem Ende des Verfahrweges 5 liegen. Da jede der Positionen ein anderes Übersetzungsverhältnis im Meßtransformator hervorruft, wird durch jede der Positionen a, b, c, d eine insbesondere bezüglich der Amplitude unterschiedliche Meßwechselspannung Uw erzeugt, so daß eine eindeutige Identifikation der aktuellen Linearposition des Ansteuermagneten 4 möglich ist.

Gemäß der Darstellung in Figur 2 wird die Meßwechselspannung Uw am Ausgang der zweiten, geteilten Wicklung 3 hierzu erfindungsgemäß einem Gleichrichter 13 zugeführt, welcher hieraus eine Meßgleichspannung Ug mit einer von der aktuellen Lage des Ansteuermagneten 4 auf dem Verfahrweg 5 abhängigen Amplitude bildet. Entsprechend einer weiteren, in Figur 2 bereits dargestellten Ausführung ist es vorteilhaft, wenn der Gleichrichter 13 bezüglich der Phasenlage des in die erste, langgestreckte Wicklung 1 eingeprägten Stromes I synchronisiert wird. Hierzu wird in Figur 2 der vom Taktgeber 10 erzeugte Steuertakt auch dem in einem solchen Fall phasenempfindlichen Gleichrichter 13 als Referenz zugeführt. Die am Ausgang des Gleichrichters 13 entstehende, bezüglich der Amplitude von der aktuellen Linearposition des Ansteuermagneten 4 abhängige Gleichspannung Ug kann bei Bedarf in einem nachfolgenden Meßumformer 14 in einen dimensionsrichtigen Lagemeßwert L umgesetzt werden.

Die Synchronisierung des Gleichrichters 13 bezüglich der Phasenlage des in die erste, langgestreckte Wicklung 1 eingeprägten Stromes I hat den Vorteil, daß die Auflösung der Meßgleichspannung Ug erhöht wird. Dies hat zur Folge, daß der Gleichrichter 13 bei annähernd mittiger Position 12 des Ansteuermagneten 4 auf dem Verfahrweg 5 eine Meßgleichspannung Ug mit der Amplitude der Größe von etwa Null abgibt, während die Meßgleichspannung Ug bei einer auf der einen bzw. anderen Seite neben der mittigen Position 12 befindlichen Lage des Ansteuermagneten 4 auf dem Verfahrweg 5 eine positive bzw. negative Amplitude aufweist, deren Absolutwert mit dem Abstand von der mittigen Position 12 zunimmt. Dies wird desweiteren anhand der Zeitverläufe der Figuren 3b bis 3e näher erläutert.

Die Figuren 3b bis 3e zeigen beispielhaft bei Vorliegen des gemäß der Darstellung in Figur 3a dreieckförmigen, eingeprägten Wechselstromes I die Zeitverläufe der zu den vier in Figur 2 dargestellten unterschiedlichen Positionen a, b, c, d des Ansteuermagneten auf dem Verfahrweg 5 gehörigen Meßwechselspannungen Uw und Meßgleichspannungen Ug. So werden bei den Positionen a bzw. b Meßwechselspannungen Uw und Meßgleichspannungen Ug erzeugt, welche in den Figuren 3b und 3c in durchgezogener bzw. strichlierter Linie dargestellt sind. Dabei weisen die Meßwechselspannungen Uw in Figur 3b eine positive Phasenlage auf, so daß die dazugehörigen Meßgleichspannungen Ug in Figur 3c jeweils eine positive Amplitude haben.

Die bei den Positionen c bzw. d erzeugen Meßwechselspannungen Uw und Meßgleichspannungen Ug sind in den Figuren 3d und 3e ebenfalls in durchgezogener bzw. strichlierter Linie dargestellt. Dabei weisen die Meßwechselspannungen Uw in Figur 3d im Vergleich zu Figur 3b eine negative Phasenlage auf, so daß die dazugehörigen Meßgleichspannungen Ug in Figur 3e jeweils eine negative Amplitude haben. An einem Vergleich der Figuren 3c und 3e ist zu erkennen, daß jeder der unterschiedlichen Positionen a, b, c, d des Ansteuermagneten in Figur 2 eine unterschiedlicher, positiver oder negativer Amplitudenwert der Meßgleichspannung Ug zugeordnet werden kann, so daß eine eindeutige Bestimmung der aktuellen Linearposition möglich ist.

Die erfindungsgemäße Vorrichtung hat den Vorteil, daß auf Grund der erfindungsgemäßen Wechselstromeinprägung in die erste, langgestreckte Wicklung 2 die induzierte Meßwechselspannung Uw an den Anschlußkontakten 9 der zweiten, geteilten Wicklung 3 unabhängig ist von den aktuellen Werten der Induktivität und des Innenwiderstandes des Meßtransformators. Temperaturbedingte Driftungen dieser Werte können somit die Meßgenauigkeit, d.h. die Abbildung der Linearposition eines Objektes auf dem Verfahrweg 5 in eine Meßgleichspannung Ug, nicht beeinträchtigen. Es sind somit keine schaltungstechnisch aufwendigen Kompensationsmaßnahmen notwendig.

Die Einprägung des dreieckförmigen Stromes hat den weiteren Vorteil, daß die induzierte Meßwechselspannung Uw gemäß der Darstellung in den Figuren 3b und 3d rechteckfömig ist, und eine von der aktuellen der Lage des Ansteuermagneten 4 auf dem Verfahrweg 5 abhängigen Stufenhöhe aufweist. Der diese Meßwechselspannung Uw in eine Meßgleichspannung Ug umwandelnde Gleichrichter 13 kann somit einfach ausgeführt werden, wobei wiederum kein aufwendigen Maßnahmen zur Glättung von Oberwellen notwendig sind.

## Patentansprüche

1. Vorrichtung zur Erfassung der Position eines linear beweglichen Objektes, mit

   a) einem Meßtransformator mit

      a1) einem langgestreckten Kern (1),

      a2) einer ersten, langgestreckten Wicklung (2), welche auf den langgestreckten Kern (1) gewickelt ist,

      a3) einer zweiten, geteilten Wicklung (3), welche annähernd im Bereich der Enden über die erste, langgestreckte Wicklung (2) gewickelt ist, und

a4) einem Ansteuermagneten (4), welcher längs eines linearen Verfahrwegs (5) annähernd parallel zur ersten, langgestreckten Wicklung (2) beweglich ist, und mit

b) einer Ansteuer- und Auswerteschaltung , mit

b1) einer Stromquelle (11), welche einen periodischen, dreieckförmigen Wechselstrom (I) in die erste, langgestreckte Wicklung (2) einprägt, und

b2) einem Gleichrichter (13), welcher aus einer Meßwechselspannung (Uw) am Ausgang der zweiten, geteilten Wicklung (3) eine Meßgleichspannung (Ug) mit einer von der aktuellen Lage des Ansteuermagneten (4) auf dem Verfahrweg (5) abhängigen Amplitude bildet und bezüglich der Phasenlage des in die erste, langgestreckte Wicklung (1) eingeprägten periodischen, dreieckförmigen Wechselstromes (I) synchronisiert ist.

2. Vorrichtung nach Anspruch 1, wobei der Gleichrichter (13) bei annähernd mittiger Position (12) des Ansteuermagneten (4) auf dem Verfahrweg (5) eine Meßgleichspannung (Ug) mit einer Amplitude des Wertes Null abgibt, während die Meßgleichspannung (Ug) bei einer auf der einen bzw. anderen Seite neben der mittigen Position (12) befindlichen Lage des Ansteuermagneten (4) auf dem Verfahrweg (5) eine positive bzw. negative Amplitude aufweist, deren Absolutwert mit dem Abstand von der mittigen Position (12) zunimmt.

## Claims

1. Device for detecting the position of a linearly movable object, having

a) a measuring transformer having

a1) an elongated core (1),
a2) a first, elongated winding (2), which is wound onto the elongated core (1),
a3) a second, divided winding (3), which is wound over the first, elongated winding (2) substantially in the region of the ends, and
a4) a control magnet (4) which is movable along a linear travel path (5) which is substantially parallel with respect to the first, elongated winding (2), and having

b) a control and evaluation circuit, having

b1) a current source (11), which injects a periodic triangular alternating current (I) into the first elongated winding (2), and
b2) a rectifier (13), which forms from a measuring alternating voltage (Uw) at the output of the second divided winding (3) a measuring direct voltage (Ug) having an amplitude which is dependent on the current position of the control magnet (4) on the travel path (5) and is synchronised with respect to the phase angle of the periodic, triangular alternating current (I) which is injected into the first, elongated winding (1 (sic)).

2. Device according to claim 1, in which in the event of a substantially central position (12) of the control magnet (4) on the travel path (5), the rectifier (13) outputs a measuring direct voltage (Ug) which has an amplitude of the value zero, while in the event of a position of the control magnet (4) on the travel path (5) that is located on one side or the other next to the central position (12), the measuring direct voltage (Ug) has a positive or negative amplitude respectively, the absolute value of which increases with the distance from the central position (12).

## Revendications

1. Dispositif pour détecter la position d'un objet mobile linéairement, comportant :

a) un transducteur de mesure comportant

a1) un noyau (1) oblong,

a2) un premier enroulement (2) oblong, qui est enroulé sur le noyau (1) oblong,

a3) un deuxième enroulement (3) divisé, qui est enroulé à peu près dans la zone des extrémités sur le premier enroulement (2) oblong, et

a4) un aimant (4) de commande, qui est mobile le long d'une voie (5) linéaire de déplacement, à peu près parallèlement au premier enroulement (2) oblong, et comportant

b) un circuit de commande et d'exploitation comportant :

b1) une source (11) de courant qui injecte un courant (I) alternatif périodique triangu-

**EP 0 693 674 B1**

laire dans le premier enroulement (2) oblong, et

b2) un redresseur (13), qui forme à partir d'une tension (Uw) alternative de mesure à la sortie du deuxième enroulement (3) divisé une tension (Ug) continue de mesure ayant une amplitude dépendant de la position instantanée de l'aimant (4) de commande sur la voie (5) de déplacement et qui est synchronisé par rapport à la position en phase du courant (I) alternatif périodique triangulaire injecté au premier enroulement (2) oblong.

2. Dispositif suivant la revendication 1, le redresseur (13) fournissant, pour une position (12) à peu près médiane de l'aimant (4) de commande sur la voie (5) de déplacement, une tension (Ug) continue de mesure ayant une amplitude de valeur nulle, tandis que la tension (Ug) continue de mesure a, pour une position de l'aimant (4) de commande sur la voie (5) de déplacement se trouvant d'un côté ou de l'autre de la position (12) médiane, une amplitude positive ou négative, dont la valeur absolue augmente avec la distance par rapport à la position (12) médiane.

FIG.1

FIG.2

FIG.3a

FIG.3b

FIG.3c

FIG.3d

FIG.3e